(19) Europäisches Patentamt
European Patent Office
Office européen des brevets

(11) **EP 4 160 904 B1**

(12) **EUROPEAN PATENT SPECIFICATION**

(45) Date of publication and mention
of the grant of the patent:
**08.04.2026 Bulletin 2026/15**

(21) Application number: **21812131.7**

(22) Date of filing: **05.02.2021**

(51) International Patent Classification (IPC):
*H02P 6/185* (2016.01)     *H02P 21/32* (2016.01)
*H02P 29/024* (2016.01)     *H02P 21/18* (2016.01)

(52) Cooperative Patent Classification (CPC):
**H02P 6/185; H02P 21/18; H02P 21/32;**
**H02P 29/024;** H02P 2203/03; Y02T 10/64

(86) International application number:
**PCT/JP2021/004253**

(87) International publication number:
**WO 2021/240893 (02.12.2021 Gazette 2021/48)**

(54) **SYNCHRONOUS ELECTRIC MOTOR DRIVE DEVICE AND SYNCHRONOUS ELECTRIC MOTOR DRIVE METHOD**

SYNCHRONMOTORANTRIEBSVORRICHTUNG UND
SYNCHRONMOTORANTRIEBSVERFAHREN

DISPOSITIF ET PROCÉDÉ D'ENTRAÎNEMENT DE MOTEUR ÉLECTRIQUE SYNCHRONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2020 JP 2020092537**

(43) Date of publication of application:
**05.04.2023 Bulletin 2023/14**

(73) Proprietor: **Astemo, Ltd.**
**Tokyo 100-0004 (JP)**

(72) Inventors:
• **SATO, Hiroaki**
**Tokyo 100-8280 (JP)**
• **AOYAGI, Shigehisa**
**Tokyo 100-8280 (JP)**
• **NONOMURA, Shigeyuki**
**Hitachinaka-shi, Ibaraki 312-8503 (JP)**
• **MATSUI, Hirokazu**
**Hitachinaka-shi, Ibaraki 312-8503 (JP)**

(74) Representative: **Strehl & Partner mbB**
**Maximilianstrasse 54**
**80538 München (DE)**

(56) References cited:
JP-A- 2011 050 198    JP-A- 2012 182 929
JP-A- 2012 182 929    JP-A- 2015 050 916
JP-A- 2015 050 916    US-A1- 2016 285 396

## Description

Technical Field

The present invention relates to a drive device of a synchronous motor and a method of driving the synchronous motor.

Background Art

A permanent magnet synchronous motors (hereinafter, referred to as a synchronous motor) is used, for example, as main motors in an electric vehicle due to advantages such as high efficiency, high power factor, and low maintenance cost. In order to control such a synchronous motor, a power converter which is an inverter is used. Also, in order to control a torque and a speed of the synchronous motor by the power converter, it is required to accurately know a position of a magnetic pole of a rotor of the synchronous motor.

As a method for detecting the position of the magnetic pole of the rotor, there is a method of estimating the magnetic pole position of the rotor by applying a voltage vector. In this case, in the electric vehicle, it is required to estimate an initial magnetic pole position of the rotor while the synchronous motor is stopped with high accuracy.

PTL 1 discloses a technique of applying a voltage vector to each of three phases (a U phase, a V phase, and a W phase) of a synchronous motor and estimating an initial magnetic pole position of a rotor based on a current generated by the application of the voltage vector.

Citation List

Patent Literature

PTL 1: JP 2016-171741 A

Drive controllers for synchronous motors providing for the calculation of an initial magnetic pole position based on three-phase current maxima and minima are disclosed in US 2016/285396 A1 and JP 2015 050916 A. A further motor controller involving the use of two different magnetic pole position detectors and the comparison of their measurements is disclosed in JP 2012 182929 A.

Summary of Invention

Technical Problem

In PTL 1, a magnetic saturation characteristic of a synchronous motor is used. However, a degree of magnetic saturation does not always occur in a sinusoidal shape with respect to the initial magnetic pole position. In general, it is known that a magnetic flux in an N-pole direction of a permanent magnet used for a rotor of a synchronous motor and a magnetic flux in a direction orthogonal thereto interfere with each other, and due to this, magnetic saturation occurs in a sinusoidal shape distorted with respect to an initial magnetic pole position. For example, due to the influence of interference, magnetic saturation may occur more when the initial magnetic pole position is near the U phase than when the initial magnetic pole position coincides with the U phase. In particular, a synchronous motor used as a main motor in an electric vehicle is required to be downsized, and thus often has such characteristics. Therefore, the technique described in PTL 1 has a problem that a large error occurs in the estimation of the initial magnetic pole position of the rotor.

Solution to Problem

The drive device of a synchronous motor of the present invention and the method of driving the synchronous motor by the drive device are defined in independent claims 1 and 3. Further advantageous features are set out in dependent claim 2.

Advantageous Effects of Invention

According to the present invention, an initial magnetic pole position of a rotor of a synchronous motor can be estimated with high accuracy while the synchronous motor is stopped.

Brief Description of Drawings

[FIG. 1] FIG. 1 is a configuration diagram of a drive device according to a first embodiment.
[FIG. 2] FIG. 2 is a detailed configuration diagram of a voltage pulse generation unit according to the first embodiment.
[FIG. 3] FIG. 3 is a diagram illustrating a relationship between three-phase voltage commands and three-phase currents according to the first embodiment.
[FIG. 4] FIG. 4 is a detailed configuration diagram of a magnetic pole position estimation unit according to the first embodiment.
[FIG. 5] FIG. 5 is a detailed configuration diagram of a magnetic pole position estimation unit according to a second embodiment.
[FIG. 6] FIG. 6 is a detailed configuration diagram of a position estimator according to the second embodiment.
[FIG. 7] FIG. 7 is a configuration diagram of a drive device according to a third embodiment.

Description of Embodiments

Hereinafter, embodiments of the present invention are described with reference to the drawings. The following description and drawings are examples for describing the present invention, and are omitted and simplified as appropriate for the sake of clarity of description. The present invention can be carried out in various other forms. Unless otherwise specified, each component may be singular or plural.

[First Embodiment]

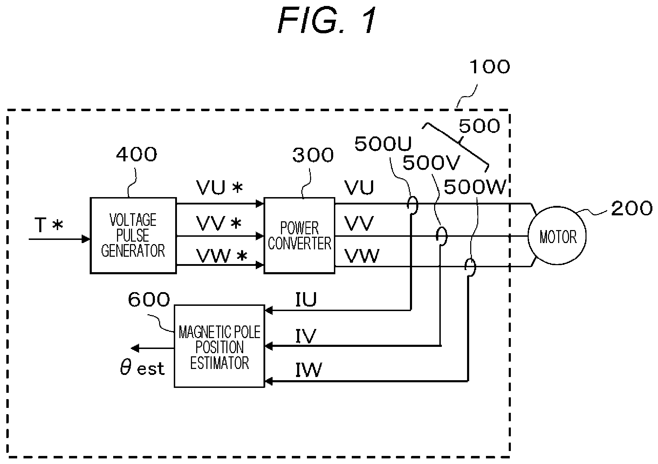

FIG. 1 is a configuration diagram of a drive device 100 according to the present embodiment.
The drive device 100 includes a power converter 300, a voltage pulse generation unit 400, a current detection unit 500, and a magnetic pole position estimation unit 600, and drives a synchronous motor 200.
The synchronous motor 200 is a permanent magnet-type synchronous motor and includes a permanent magnet (ferromagnetic body) as a rotor and an armature winding as a stator. In the present example not forming part of the invention, a position sensor that detects a magnetic pole position of the synchronous motor 200 is not provided, but the magnetic pole position is estimated instead. In the case of estimating the magnetic pole position, downsizing, cost reduction, and reliability improvement of the synchronous motor 200 can be achieved.
When the synchronous motor 200 is driven, the voltage pulse generation unit 400 generates voltage commands VU*, VV*, and VW* for sequentially applying positive and negative voltages to a U phase, a V phase, and a W phase of the synchronous motor 200 in response to an input torque command T*, and outputs the generated commands to the power converter 300. The voltage pulse generation unit 400 generates the voltage commands VU*, VV*, and VW* based on the magnetic pole position estimated by the magnetic pole position estimation unit 600.
The power converter 300 is, for example, an inverter, and performs pulse width modulation (PWM) on the voltage commands VU*, VV*, and VW* from the voltage pulse generation unit 400 to turn on/off a semiconductor switch element of the power converter 300 when the synchronous motor 200 is driven. As a result, voltages VU, VV, and VW are applied to the synchronous motor 200 to drive the synchronous motor 200.
The current detection unit 500 includes current sensors 500U, 500V, and 500W that detect three-phase currents flowing through the synchronous motor 200. The current sensors 500U, 500V, and 500W are arranged for respective phases of the synchronous motor 200. The current detection unit 500 detects three-phase currents IU, IV, and IW and outputs the three-phase currents IU, IV, and IW to the magnetic pole position estimation unit 600. Although an example in which the current sensors 500U, 500V, and 500W are arranged for the respective three phases of the synchronous motor 200 is provided, the current sensors may be arranged only for two phases (for example, the U phase and the V phase) by utilizing the fact that the sum of the three-phase alternating currents is 0. The three-phase current of the synchronous motor 200 may be obtained from the current flowing through a DC bus (not illustrated) on the input side of the power converter 300. With these configurations, the number of current sensors can be reduced, and cost reduction can be achieved.
Based on the three-phase currents IU, IV, and IW detected with the current detection unit 500, the magnetic pole position estimation unit 600 estimates an initial magnetic pole position θest of the rotor of the synchronous motor 200 while the synchronous motor 200 is stopped. Details of the magnetic pole position estimation unit 600 while the synchronous motor 200 is stopped are described below.

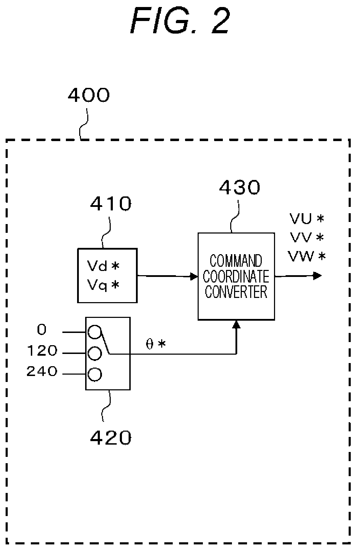

FIG. 2 is a detailed configuration diagram of the voltage pulse generation unit 400. This configuration diagram illustrates a configuration in a case where the initial magnetic pole position θest of the rotor of the synchronous motor 200 is estimated.
The voltage pulse generation unit 400 includes a voltage command generating unit 410, a phase switch 420, and a command coordinate conversion unit 430.

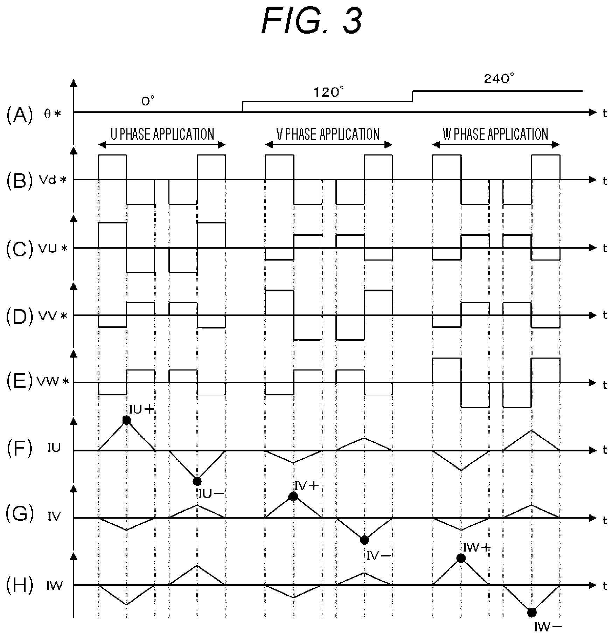

The voltage command generating unit 410 outputs the voltage commands Vd* and Vq*. In the present embodiment, Vd* alternating between positive and negative illustrated in FIG. 3(B) described below is generated, and Vq* is zero.

The phase switch 420 generates a phase reference value θ* for converting Vd* and Vq* generated by the voltage command generating unit 410 into three-phase voltage commands. As the phase reference values θ*, 0 degrees, 120 degrees, and 240 degrees are sequentially output.

The command coordinate conversion unit 430 receives the voltage commands Vd* and Vq* generated by the voltage command generating unit 410 and the phase reference values θ* output from the phase switch and converts coordinates thereof into the three-phase voltage commands VU*, VV*, and VW*. The coordinates are converted by Expressions (1), (2), and (3).

$$VU^* = 2/3 \times (Vd^* \times \cos(\theta^*) - Vq^* \times \sin(\theta^*))\ldots (1)$$

$$VV^* = 2/3 \times (Vd^* \times \cos(\theta^* - 2\pi/3) - Vq^* \times \sin(\theta^* - 2\pi/3))\ldots (2) \tag{2}$$

$$VW^* = 2/3 \times (Vd^* \times \cos(\theta^* - 4\pi/3) - Vq^* \times \sin(\theta^* - 4\pi/3))\ldots (3) \tag{3}$$

FIGS. 3(A) to 3(H) are diagrams illustrating a relationship between the three-phase voltage commands VU*, VV*, and VW* and the three-phase currents IU, IV, and IW flowing through the synchronous motor 200. FIG. 3(A) illustrates the phase reference value θ* output from the phase switch 420 and FIG. 3(B) illustrates the voltage command Vd* generated by the voltage command generating unit 410. FIGS. 3(C) to 3(E) illustrate the three-phase voltage commands VU*, VV*, and VW* output from the command coordinate conversion unit 430, respectively. FIGS. 3(F) to 3(H) illustrate the three-phase currents IU, IV, and IW detected by the current detection unit 500 and input to the magnetic pole position estimation unit 600, respectively.

As illustrated in FIG. 3(A), the phase reference values θ* are output by the phase switch 420 in the order of 0 degrees, 120 degrees, and 240 degrees. As illustrated in FIGS. 3(C) to 3 (E), the three-phase voltage commands VU*, VV*, and VW*, which are outputs of the command coordinate conversion unit 430 are applied as voltages that alternate between positive and negative, in the U phase when the phase reference value θ* is 0 degrees, in the V phase when the phase reference value θ* is 120 degrees, and in the W phase when the phase reference value θ* is 240 degrees. As a result, as illustrated in FIGS. 3(F) to 3(H), the three-phase currents IU, IV, and IW flow through the synchronous motor 200.

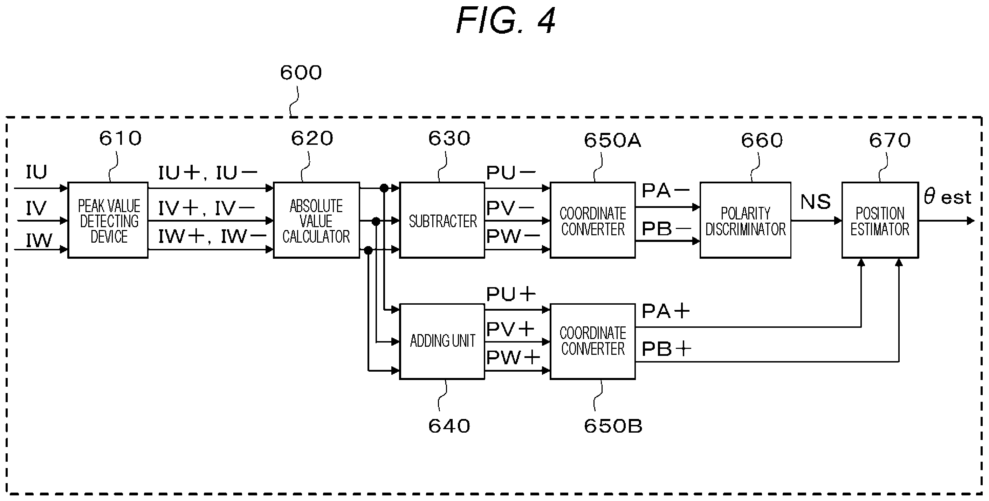

FIG. 4 is a detailed configuration diagram of the magnetic pole position estimation unit 600.

The magnetic pole position estimation unit 600 includes a peak value detector 610, an absolute value calculation unit 620, a subtraction unit 630, an addition unit 640, coordinate conversion units 650A and 650B, a polarity discriminator 660, and a position estimator 670.

The peak value detector 610 receives the current values IU, IV, and IW detected by the current detection unit 500 and detects current peak values IU+, IU-, IV+, IV-, IW+, and IW- of the respective phases.

In FIG. 3(F), the current peak IU+ is the maximum value of the U-phase current when a positive voltage is applied to the U phase with the phase reference value θ* of 0 degrees. In FIG. 3(F), the current peak IU- is the minimum value of the U-phase current when a negative voltage is applied to the U phase with the phase reference value θ* of 0 degrees.

In FIG. 3(G), the current peak IV+ is the maximum value of the V-phase current when a positive voltage is applied to the V phase with the phase reference value θ* of 120 degrees. In FIG. 3(G), the current peak IV- is the minimum value of the V-phase current when a negative voltage is applied to the V phase with the phase reference value θ* of 120 degrees.

In FIG. 3(H), the current peak IW+ is the maximum value of the W-phase current when a positive voltage is applied to the W phase with the phase reference value θ* of 240 degrees. In FIG. 3(H), the current peak IW- is the minimum value of the W-phase current when a negative voltage is applied to the W phase with the phase reference value θ* of 240 degrees.

The absolute value calculation unit 620 uses the current peak values IU+, IU-, IV+, IV-, IW+, and IW- in the respective phases as inputs, and calculates the respective absolute values.

The subtraction unit 630 calculates differences between absolute values of the current peak values of the respective phases by Expressions (4), (5), and (6), and outputs PU-, PV-, and PW-.

$$PU- = |IU+| - |IU-|\ldots (4)$$

$$PV- = |IV+| - |IV-|\ldots (5)$$

$$PW- = |IW+| - |IW-|... (6)$$

Since PU-, PV-, and PW- are respective differences of absolute values of the current values when the positive voltage is applied and the current values when the negative voltage is applied, PU-, PV-, and PW- are values indicating the degree of magnetic saturation of the synchronous motor 200.

The coordinate conversion unit 650A converts PU-, PV-, and PW-, which are the differences between the absolute values of the current peak values in the respective phases by Expressions (7) and (8) and outputs results as PA- and PB-.

$$PA- = 2/3 \times ((PU-) - 1/2 \times (PV-) - 1/2 \times (PW-))... (7)$$

$$PB- = 2/3 \times (\sqrt(3)/2 \times (PV-) - \sqrt(3)/2 \times (PW-))... (8)$$

Here, a case where initial magnetic pole positions are estimated by using the magnetic saturation characteristics of the synchronous motor 200 by calculating the difference between the absolute values of the current peak values is described. For example, in the technique described in PTL 1, after a positive voltage is applied to the U phase, a negative voltage is applied to the U phase to acquire the respective current peak values. Similarly, a positive voltage and a negative voltage are applied to the V phase and the W phase to acquire respective current peak values. Initial magnetic pole positions are estimated by using the magnetic saturation characteristics of a PM motor by calculating the difference between the absolute values of these current peak values.

In this case, for example, if a positive voltage is applied to the U phase when the initial magnetic pole position is close to the U phase, a magnetic flux due to the current flowing through the U phase and a magnetic flux due to the permanent magnet are in the same direction, so that the magnetic flux becomes excessive, and magnetic saturation occurs. When magnetic saturation occurs, the inductance of the synchronous motor 200 decreases, so that the current value increases.

As described above, when the technique disclosed in PTL 1 is used, a degree of magnetic saturation does not occur in a sinusoidal shape with respect to an initial magnetic pole position, and the degree of magnetic saturation is a non-sinusoidal wave, so that a large error occurs in the estimation of the initial magnetic pole position of the rotor.

In the present embodiment, as illustrated in FIG. 4, the addition unit 640, the coordinate conversion unit 650B, the polarity discriminator 660, and the position estimator 670 are newly provided.

As a result, for example, if a positive voltage is applied to the U phase when the initial magnetic pole position is close to the U phase, a magnetic flux due to the current flowing through the U phase and a magnetic flux due to the permanent magnet are in the same direction, but if a negative voltage is applied to the U phase, the magnetic flux due to the permanent magnet and the magnetic flux due to the current flowing through the U phase are in opposite directions to each other, and thus magnetic saturation does not occur. That is, the absolute value of the current peak value changes depending on whether a positive voltage or a negative voltage is applied to the U phase. Therefore, by obtaining the difference between the absolute value of the current peak value when a positive voltage is applied to each phase and the absolute value of the current peak value when a negative voltage is applied to each phase, the degree of the magnetic saturation characteristic of the synchronous motor 200 can be obtained, and the initial magnetic pole position of the rotor is estimated based on this degree.

The addition unit 640 illustrated in FIG. 4 adds the absolute values of the current peak values IU+, IU-, IV+, IV-, IW+, and IW- of the respective phases output from the absolute value calculation unit 620 for the respective phases by Expressions (9), (10), and (11) and outputs results as PU+, PV+, and PW+.

$$PU+ = |IU+| + |IU-|... (9)$$

$$PV+ = |IV+| + |IV-|... (10)$$

$$PW+ = |IW+| + |IW-|... (11)$$

The coordinate conversion unit 650B has a configuration similar to that of the coordinate conversion unit 650A and converts PU+, PV+, and PW+ into PA+ and PB+ by Expressions (12) and (13) to output PA+ and PB+.

$$PA+ = 2/3 \times ((PU+) - 1/2 \times (PV+) - 1/2 \times (PW+))... (12)$$

$$PB+ = 2/3 \times (\sqrt(3)/2 \times (PV+) - \sqrt(3)/2 \times (PW+))\ldots (13)$$

Since PU+, PV+, and PW+ are obtained by adding the absolute values of the current peak values, PU+, PV+, and PW+ are equivalent to the peak-to-peak values (that is, amplitudes of the currents) of the current illustrated in FIGS. 3(F) to 3(H). In general, a permanent magnet-type synchronous motor frequently used in an electric vehicle has rotation angle dependency (saliency) of inductance. Since the inductance changes depending on the rotation angle (= initial magnetic pole position), the peak-to-peak value of the current in the present embodiment also changes depending on the initial magnetic pole position. In addition, even when the degree of magnetic saturation is in a non-sinusoidal shape, the influence is canceled by obtaining the peak-to-peak value of the current, and a change in inductance due to saliency appears as a change in the peak-to-peak value of the current. Therefore, even when the degree of magnetic saturation is in a non-sinusoidal shape, the initial magnetic pole position of the rotor can be estimated with higher accuracy.

Meanwhile, in general, in the synchronous motor 200, it is known that the change in inductance due to saliency appears at a cycle of 1/2 times the rotation angle. That is, in a method using the saliency, the initial magnetic pole position can be estimated only in the range of 0 to 180 degrees, and whether the polarity of the magnet of the rotor is the N pole or the S pole cannot be discriminated.

In the present embodiment, the polarity discriminator 660 is provided to discriminate the polarity of the magnet of the rotor. The polarity discriminator 660 uses PA- and PB- obtained from the degree of magnetic saturation as inputs to calculate a first magnetic pole position θest1 by Expression (14).

$$\theta est1 = atan ((PB-)/(PA-))\ldots (14)$$

Since the first magnetic pole position θest1 obtained from the degree of magnetic saturation can be estimated in the range of 0 to 360 degrees (that is, including the polarity of the magnet of the rotor), the polarity is thereby discriminated and output as a polarity NS. When the first magnetic pole position θest1 is within a predetermined range, the polarity is determined as the N pole, and when the first magnetic pole position θest1 is out of the predetermined range, the polarity is determined as the S pole. Here, the predetermined range is, for example, a range in which the first magnetic pole position θest1 is 0 to 180 degrees. Specifically, when the first magnetic pole position is 0 to 180 degrees, the polarity is determined as the N pole, and when the first magnetic pole position is 180 to 360 degrees, the polarity is determined as the S pole.

The position estimator 670 calculates the initial magnetic pole position θest using the polarity NS and PA+ and PB+ obtained from the current peak-to-peak values of the respective phases as inputs. First, the position estimator 670 estimates a second magnetic pole position θest2 by Expression (15) based on PA+ and PB+.

$$\theta est2 = atan(-(PA+)/(PB+))\ldots (15)$$

The second magnetic pole position θest2 can be obtained only in the range of 0 to 180 degrees, and the polarity NS which is the discrimination result by the polarity discriminator 660 is used for this. When the polarity NS is determined as the N pole, the second magnetic pole position θest2 is output as it is as the initial magnetic pole position θest. Meanwhile, when the polarity NS is determined as the S pole, a value obtained by adding 180 degrees to the second magnetic pole position θest2 is output as the initial magnetic pole position θest.

According to the present embodiment, the peak values of the currents when the positive and negative voltages are sequentially applied to respective phases of the synchronous motor 200 by the voltage pulse generation unit 400 are detected to calculate subtracted values and added values of the absolute values of the current peak values. The degree of magnetic saturation is extracted from the subtraction of the absolute value, and the amplitude change of the current due to the saliency is obtained from the addition of the absolute value. Therefore, the degree of magnetic saturation and the change in amplitude of the current due to saliency can be simultaneously obtained. In addition, whether the polarity of the magnet of the rotor is the N pole or the S pole can be discriminated from the degree of magnetic saturation, and the initial magnetic pole position θest of the rotor can be accurately estimated by canceling the influence of magnetic saturation from the amplitude change of the current caused by the saliency. Therefore, in the present embodiment, without changing the time required for estimating the initial magnetic pole position θest from that in the related art, the estimation accuracy can be improved. Since the initial magnetic pole position θest can be estimated with high accuracy, sensorless control of the synchronous motor 200 can also be performed with high accuracy. For example, even when the synchronous motor 200 is used in an electric vehicle, the control performance as a main motor is improved, and comfortable ride can be provided to the occupant.

[Second Embodiment]

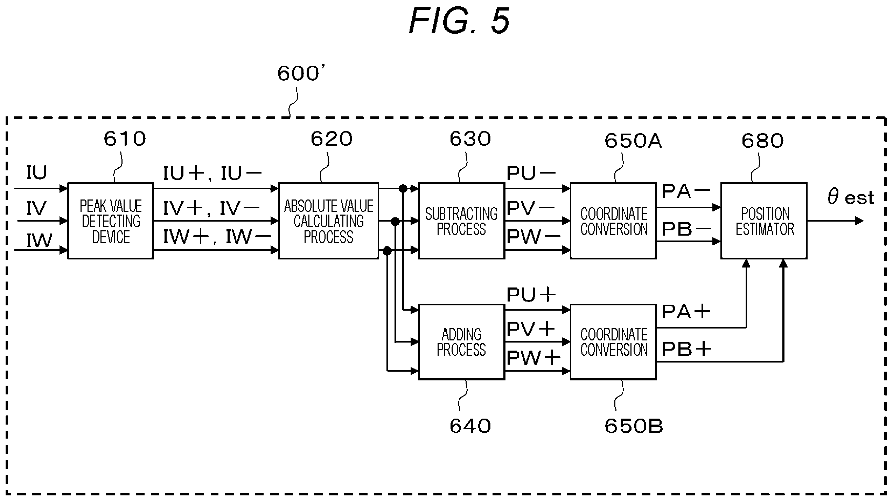

FIG. 5 is a detailed configuration diagram of a magnetic pole position estimation unit 600' according to the embodiment. The same portions as those of the magnetic pole position estimation unit 600 in the first embodiment are denoted by the same reference numerals, and the descriptions thereof are omitted. The configuration diagram of the drive device 100 of the synchronous motor 200 illustrated in FIG. 1, the detailed configuration diagram of the voltage pulse generation unit 400 illustrated in FIG. 2, and the diagram illustrating the relationship between the three-phase voltage command and the three-phase current illustrated in FIG. 3 are the same in the present embodiment.

In the first embodiment, only the first magnetic pole position is used for polarity discrimination, but in the present embodiment, the polarity NS is obtained from the first magnetic pole position and the second magnetic pole position.

In the present embodiment, as illustrated in FIG. 5, the magnetic pole position estimation unit 600' includes a position estimator 680. To the position estimator 680, PA- and PB- are input from the coordinate conversion unit 650A, and PA+ and PB+ are input from the coordinate conversion unit 650B.

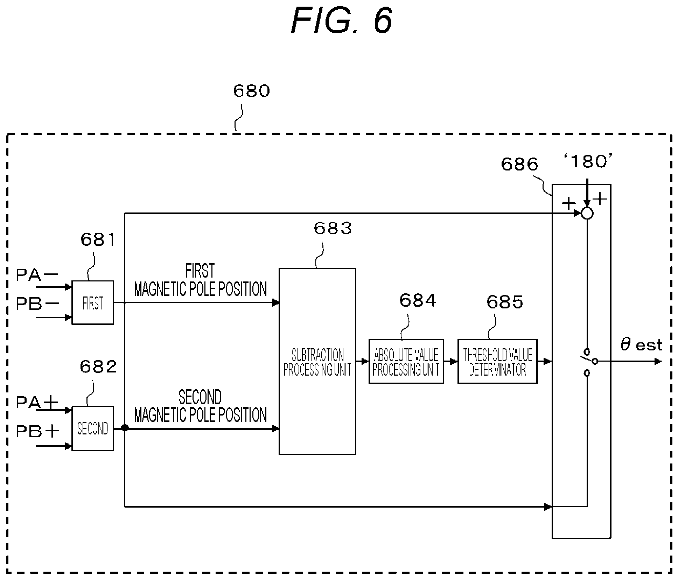

FIG. 6 is a detailed configuration diagram of the position estimator 680. The position estimator 680 includes a first magnetic pole position calculation unit 681, a second magnetic pole position calculation unit 682, a subtraction processing unit 683, an absolute value processing unit 684, a threshold determination unit 685, and an initial magnetic pole position calculation unit 686.

The first magnetic pole position calculation unit 681 calculates the first magnetic pole position $\theta$est1 by Expression (14) by using PA- and PB- as inputs. The second magnetic pole position calculation unit 682 calculates the second magnetic pole position $\theta$est2 by Expression (15) by using PA+ and PB+ as inputs.

The subtraction processing unit 683 obtains a difference between the first magnetic pole position $\theta$est1 and the second magnetic pole position $\theta$est2. The absolute value processing unit 684 obtains an absolute value of the difference between the first magnetic pole position $\theta$est1 and the second magnetic pole position $\theta$est2. Then, the threshold determination unit 685 determines that the polarity is the S pole when the absolute value of the difference between the first magnetic pole position $\theta$est1 and the second magnetic pole position $\theta$est2 is within a predetermined range, and determines that the polarity is the N pole when the absolute value is out of the predetermined range. Here, the predetermined range may be set in consideration of the error of the first magnetic pole position $\theta$est1, and is, for example, a range in which the absolute value of the difference between the first magnetic pole position $\theta$est1 and the second magnetic pole position $\theta$est2 is 90 to 270.

The initial magnetic pole position calculation unit 686 outputs a value obtained by adding 180 degrees to the second magnetic pole position $\theta$est2 when the polarity is determined as the S pole by the threshold determination unit 685 and outputs the second magnetic pole position $\theta$est2 as the initial magnetic pole position $\theta$est when the polarity is determined as the N pole.

Here, as described in the first embodiment, when the polarity NS is discriminated only from the first magnetic pole position $\theta$est1, the accuracy of the first magnetic pole position $\theta$est1 is low, and thus there is a concern that the polarity NS is incorrect. If the polarity is determined as the N pole when the first magnetic pole position $\theta$est1 is 0 to 180 degrees and determined as the S pole when the first magnetic pole position $\theta$est1 is 180 to 360 degrees, there is an error in the initial magnetic pole position $\theta$est and the first magnetic pole position $\theta$est1, and there is a concern that the polarity is incorrect when the initial magnetic pole position $\theta$est is near 180 degrees or near 360 degrees.

Meanwhile, as described in the present embodiment, by discriminating the polarity NS from the first magnetic pole position $\theta$est1 and the second magnetic pole position $\theta$est2, an error in the first magnetic pole position $\theta$est1 can be considered, and thus the initial magnetic pole position $\theta$est of the rotor can be estimated without an error in the polarity NS.

[Third Embodiment]

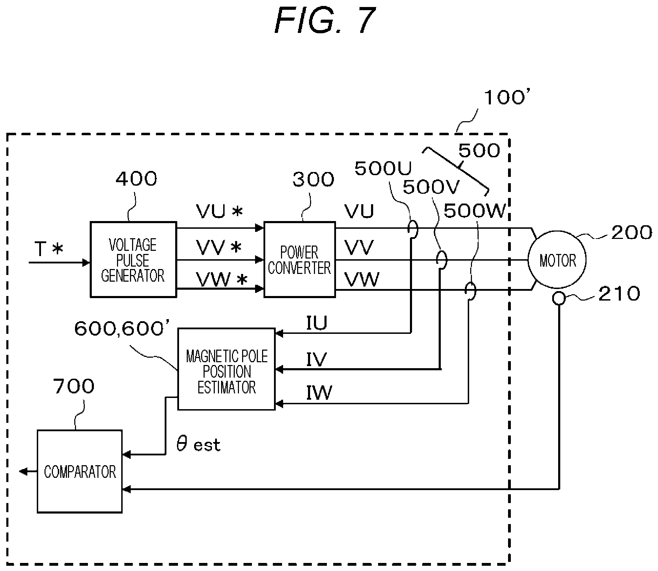

FIG. 7 is a configuration diagram of a drive device 100' according to the invention. The same portions as those in the configuration diagram of the drive device 100 in the first embodiment illustrated in FIG. 1 are denoted by the same reference numerals, and the descriptions thereof are omitted.

According to the invention, the synchronous motor 200 includes a position sensor 210 that detects a magnetic pole position of the synchronous motor 200. The magnetic pole position detected by the position sensor 210 is input to one side of a comparison unit 700. The initial magnetic pole position $\theta$est estimated by the magnetic pole position estimation unit 600 or the magnetic pole position estimation unit 600' described in the first embodiment or the second embodiment is input to the other side of the comparison unit 700. The comparison unit 700 compares the estimated initial magnetic pole position $\theta$est with the magnetic pole position detected by the position sensor 210 while the synchronous motor 200 is stopped, and determines the presence or absence of the abnormality of the position sensor 210 based on the comparison result.

The position sensor 210 such as a resolver may fail due to disconnection or short circuit of the output winding. When the synchronous motor 200 is rotating, the failure can be detected, but, while the synchronous motor 200 is stopped, it is difficult to detect the failure. Since the magnetic pole position estimation units 600 and 600' described in the first embodiment or the second embodiment can estimate the initial magnetic pole position $\theta$est while the synchronous motor 200 is stopped, a failure of the position sensor 210 can be detected even when the synchronous motor 200 is stopped. As a

**EP 4 160 904 B1**

result, it is possible to provide the drive device 100' of the synchronous motor 200 with higher reliability.

In the first to third embodiments, the voltage pulse generation unit 400, the magnetic pole position estimation units 600 and 600', the comparison unit 700, and the like are described as hardware, but the functions thereof may be embodied by a computer and a program. Then, the program can be executed by a computer including a CPU, a memory, and the like. All or a part of the processing may be embodied by a hard logic circuit. Furthermore, the program may be supplied as various forms of computer-readable computer program products such as a storage medium and a data signal (carrier wave).

The present invention is not limited to the embodiments described above, and the scope of protection is defined in the appended claims. In addition, a part of the configuration of a certain embodiment may be replaced with the configuration of another embodiment, or the configuration of another embodiment may be added to the configuration of a certain embodiment.

Reference Signs List

| | |
|---|---|
| 100, 100' | drive device |
| 200 | synchronous motor |
| 300 | power converter |
| 400 | voltage pulse generation unit |
| 410 | voltage command generating unit |
| 420 | phase switch |
| 430 | command coordinate conversion unit |
| 500 | current detection unit |
| 600, 600' | magnetic pole position estimation unit |
| 610 | peak value detector |
| 620 | absolute value calculation unit |
| 630 | subtraction unit |
| 640 | addition unit |
| 650A, 650B | coordinate conversion unit |
| 660 | polarity discriminator |
| 670 | position estimator |
| 680 | position estimator |
| 681 | first magnetic pole position calculation unit |
| 682 | second magnetic pole position calculation unit |
| 683 | subtraction processing unit |
| 684 | absolute value processing unit |
| 685 | threshold determination unit |
| 686 | initial magnetic pole position calculation unit |

**Claims**

1. A drive device (100) of a synchronous motor (200) comprising:

a power converter (300) adapted to drive the synchronous motor by sequentially applying positive and negative voltages to respective phases of the synchronous motor;
a current detection unit (500) adapted to detect a phase current flowing through the synchronous motor;
a magnetic pole position estimation unit (600) adapted to estimate an initial magnetic pole position of a rotor of the synchronous motor based on the phase current detected by the current detection unit,
wherein the synchronous motor includes a position sensor (210) adapted to detect the magnetic pole position of the synchronous motor, and
a comparison unit (700) adapted to compare the initial magnetic pole position obtained by the magnetic pole position estimation unit with the magnetic pole position obtained by the position sensor;
wherein the magnetic pole position estimation unit is adapted to acquire a maximum value and a minimum value of the phase current while the synchronous motor is stopped, to calculate a first magnetic pole position from a subtracted value of an absolute value of each of the maximum value and the minimum value, to calculate a second magnetic pole position from an added value of the absolute value of each of the maximum value and the minimum value, to discriminate a polarity of a magnet of the rotor from the first magnetic pole position, and to estimate an

8

initial magnetic pole position of the rotor of the synchronous motor from the polarity and the second magnetic pole position; and

wherein the comparison unit is adapted to determine presence or absence of abnormality of the position sensor based on a comparison result obtained by the comparison unit while the synchronous motor is stopped.

2. The drive device (100) of the synchronous motor (200) according to claim 1,

wherein the magnetic pole position estimation unit (600) is adapted to discriminate a polarity of the magnet from the first magnetic pole position and the second magnetic pole position and to estimate an initial magnetic pole position of the rotor of the synchronous motor from the polarity and the second magnetic pole position.

3. A method of driving a synchronous motor (200) by a drive device (100) of the synchronous motor that includes a power converter (300) that drives the synchronous motor by sequentially applying positive and negative voltages to respective phases of the synchronous motor, a current detection unit (500) that detects a phase current flowing through the synchronous motor, and wherein the synchronous motor includes a position sensor (210) that detects the magnetic pole position of the synchronous motor, the method comprising:

acquiring a maximum value and a minimum value of the phase current detected by the current detection unit while the synchronous motor is stopped;

calculating a first magnetic pole position from a subtracted value of an absolute value of each of the maximum value and the minimum value;

calculating a second magnetic pole position from an added value of the absolute value of each of the maximum value and the minimum value;

discriminating a polarity of a magnet of the rotor of the synchronous motor from the first magnetic pole position;

estimating an initial magnetic pole position of the rotor of the synchronous motor from the polarity and the second magnetic pole position:

comparing the estimated initial magnetic pole position with the magnetic pole position obtained by the position sensor; and

determining presence or absence of abnormality of the position sensor based on a comparison result obtained in the comparison step, while the synchronous motor is stopped.

**Patentansprüche**

1. Antriebsvorrichtung (100) für einen Synchronmotor (200), umfassend:

einen Stromrichter (300), der dazu ausgelegt ist, den Synchronmotor anzutreiben, indem er sequenziell positive und negative Spannungen an entsprechende Phasen des Synchronmotors anlegt;

eine Stromerfassungseinheit (500), die dazu ausgelegt ist, einen durch den Synchronmotor fließenden Phasenstrom zu erfassen;

eine Magnetpol-Positionsschätzeinheit (600), die dazu ausgelegt ist, eine anfängliche Magnetpolposition eines Rotors des Synchronmotors basierend auf dem von der Stromerfassungseinheit erfassten Phasenstrom zu schätzen,

**gekennzeichnet dadurch, dass** der Synchronmotor enthält:

einen Positionssensor (210), der dazu ausgelegt ist, die Magnetpolposition des Synchronmotors zu erfassen, und

eine Vergleichseinheit (700), die dazu ausgelegt ist, die von der Magnetpol-Positionsschätzeinheit erhaltene anfängliche Magnetpolposition mit der vom Positionssensor erhaltenen Magnetpolposition zu vergleichen;

wobei die Magnetpolpositions-Schätzeinheit dazu ausgelegt ist, einen Maximalwert und einen Minimalwert des Phasenstroms zu erfassen, während der Synchronmotor gestoppt ist, eine erste Magnetpolposition aus einem subtrahierten Wert eines Absolutwerts von jedem des Maximalwerts und des Minimalwerts zu berechnen, eine zweite Magnetpolposition aus einem addierten Wert des Absolutwerts von jedem des Maximalwerts und des Minimalwerts zu berechnen, eine Polarität eines Magneten des Rotors aus der ersten Magnetpolposition zu unterscheiden und eine anfängliche Magnetpolposition des Rotors des Synchronmotors aus der Polarität und der zweiten Magnetpolposition zu schätzen; und

wobei die Vergleichseinheit dazu ausgelegt ist, das Vorhandensein oder das Nichtvorhandensein einer Anomalie des Positionssensors basierend auf einem von der Vergleichseinheit erhaltenen Vergleichsergebnis zu bestimmen, während der Synchronmotor gestoppt ist.

2. Antriebsvorrichtung (100) für den Synchronmotor (200) nach Anspruch 1,
wobei die Magnetpol-Positionsschätzeinheit (600) dazu ausgelegt ist, eine Polarität des Magneten aus der ersten Magnetpolposition und der zweiten Magnetpolposition zu unterscheiden und eine anfängliche Magnetpolposition des Rotors des Synchronmotors aus der Polarität und der zweiten Magnetpolposition zu schätzen.

3. Verfahren zum Antreiben eines Synchronmotors (200) durch eine Antriebsvorrichtung (100) des Synchronmotors, die einen Stromumrichter (300), der den Synchronmotor antreibt, indem er sequenziell positive und negative Spannungen an entsprechende Phasen des Synchronmotors anlegt, eine Stromerfassungseinheit (500), die einen durch den Synchronmotor fließenden Phasenstrom erfasst, umfasst und wobei der Synchronmotor einen Positionssensor (210) umfasst, der die Magnetpolposition des Synchronmotors erfasst, wobei das Verfahren umfasst:

Erfassen eines Maximalwerts und eines Minimalwerts des von der Stromerfassungseinheit erfassten Phasenstroms, während der Synchronmotor gestoppt ist;
Berechnen einer ersten Magnetpolposition aus einem subtrahierten Wert eines Absolutwerts von jedem des Maximalwerts und des Minimalwerts;
Berechnen einer zweiten Magnetpolposition aus einem addierten Wert des Absolutwerts von jedem des Maximalwerts und des Minimalwerts;
Unterscheiden einer Polarität eines Magneten des Rotors des Synchronmotors aus der ersten Magnetpolposition;
Schätzen einer anfänglichen Magnetpolposition des Rotors des Synchronmotors aus der Polarität und der zweiten Magnetpolposition;
Vergleichen der geschätzten anfänglichen Magnetpolposition mit der vom Positionssensor erhaltenen Magnetpolposition; und
Bestimmen des Vorhandenseins oder des Nichtvorhandenseins einer Anomalie des Positionssensors basierend auf einem im Vergleichsschritt erhaltenen Vergleichsergebnis, während der Synchronmotor gestoppt ist.

**Revendications**

1. Dispositif (100) d'entraînement d'un moteur synchrone (200) comprenant :

un convertisseur (300) de puissance adapté à entraîner le moteur synchrone en appliquant séquentiellement des tensions positives et négatives à des phases respectives du moteur synchrone ;
une unité (500) de détection de courant adaptée à détecter un courant de phase traversant le moteur synchrone ;
une unité (600) d'estimation de position de pôle magnétique adaptée à estimer une position initiale de pôle magnétique d'un rotor du moteur synchrone sur la base du courant de phase détecté par l'unité de détection de courant,
dans lequel le moteur synchrone inclut
un capteur (210) de position adapté à détecter la position de pôle magnétique du moteur synchrone, et
une unité (700) de comparaison adaptée à comparer la position initiale de pôle magnétique obtenue par l'unité d'estimation de position de pôle magnétique avec la position de pôle magnétique obtenue par le capteur de position ;
dans lequel l'unité d'estimation de position de pôle magnétique est adaptée à acquérir une valeur maximum et une valeur minimum du courant de phase tandis que le moteur synchrone est stoppé, à calculer une première position de pôle magnétique à partir d'une valeur soustraite d'une valeur absolue de chacune de la valeur maximum et de la valeur minimum, à calculer une deuxième position de pôle magnétique à partir d'une valeur ajoutée de la valeur absolue de chacune de la valeur maximum et de la valeur minimum, à distinguer une polarité d'un aimant du rotor de la première position de pôle magnétique, et à estimer une position initiale de pôle magnétique du rotor du moteur synchrone à partir de la polarité et de la deuxième position de pôle magnétique ; et
dans lequel l'unité de comparaison est adaptée à déterminer la présence ou l'absence d'anomalie du capteur de position sur la base d'un résultat de comparaison obtenu par l'unité de comparaison tandis que le moteur synchrone est stoppé.

2. Dispositif (100) d'entraînement du moteur synchrone (200) selon la revendication 1,
dans lequel l'unité (600) d'estimation de position de pôle magnétique est adaptée à distinguer une polarité de l'aimant de la première position de pôle magnétique et de la deuxième position de pôle magnétique et à estimer une position initiale de pôle magnétique du rotor du moteur synchrone à partir de la polarité et de la deuxième position de pôle magnétique.

3. Procédé d'entraînement d'un moteur synchrone (200) par un dispositif (100) d'entraînement du moteur synchrone qui inclut un convertisseur (300) de puissance qui entraîne le moteur synchrone en appliquant séquentiellement des tensions positives et négatives à des phases respectives du moteur synchrone, une unité (500) de détection de courant qui détecte un courant de phase traversant le moteur synchrone, et dans lequel le moteur synchrone inclut un capteur (210) de position qui détecte la position de pôle magnétique du moteur synchrone, le procédé comprenant :

l'acquisition d'une valeur maximum et d'une valeur minimum du courant de phase détecté par l'unité de détection de courant tandis que le moteur synchrone est stoppé ;
le calcul d'une première position de pôle magnétique à partir d'une valeur soustraite d'une valeur absolue de chacune de la valeur maximum et de la valeur minimum ;
le calcul d'une deuxième position de pôle magnétique à partir d'une valeur ajoutée de la valeur absolue de chacune de la valeur maximum et de la valeur minimum ;
la distinction d'une polarité d'un aimant du rotor du moteur synchrone de la première position de pôle magnétique ;
l'estimation d'une position initiale de pôle magnétique du rotor du moteur synchrone à partir de la polarité et de la deuxième position de pôle magnétique ;
la comparaison de la position initiale de pôle magnétique estimée avec la position de pôle magnétique obtenue par le capteur de position ; et
la détermination de la présence ou de l'absence d'une anomalie du capteur de position sur la base d'un résultat de comparaison obtenu à l'étape de comparaison, tandis que le moteur synchrone est stoppé.

# FIG. 1

# FIG. 2

400

410

430

Vd *
Vq *

COMMAND
COORDINATE
CONVERTER

VU *
VV *
VW *

0

120

240

θ *

420

# FIG. 3

(A) θ*

0°    120°    240°    t

U PHASE APPLICATION    V PHASE APPLICATION    W PHASE APPLICATION

(B) Vd*    t

(C) VU*    t

(D) VV*    t

(E) VW*    t

(F) IU    IU+    IU−    t

(G) IV    IV+    IV−    t

(H) IW    IW+    IW−    t

*FIG. 4*

FIG. 5

# FIG. 6

# FIG. 7

**EP 4 160 904 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016171741 A
- US 2016285396 A1
- JP 2015050916 A
- JP 2012182929 A